# EUROPEAN PATENT APPLICATION

(11) **EP 4 706 936 A1**
(43) Date of publication of application: **11.03.2026**
(21) Application number: 24819005.0
(22) Date of filing: 28.03.2024
(51) Int. Cl.: B29C 48/92, B29C 48/08, B29C 48/25, B29C 48/88, B29C 48/305, B29C 55/02, B29L 7/00

(54) **RESIN MOLDING SYSTEM, OPERATING CONDITION CONTROL METHOD, AND PROGRAM**

(30) Priority: 06.06.2023 JP 2023092956
(71) Applicant: The Japan Steel Works, Ltd., Tokyo 141-0032 (JP)
(72) Inventor: ISHIGURO, Ryo, Tokyo 141-0032 (JP); KIMURA, Koichi, Tokyo 141-0032 (JP)
(74) Representative: Simmons & Simmons LLP (Munich)
(86) International application number: PCT/JP2024/012653
(87) International publication number: WO 2024/252766

(57) **Abstract**

The present invention stably sets a proper operating condition of a resin molding system without depending on the skill of a user. At least one of a plurality of devices constituting the resin molding system is provided with a sensor part for detecting the state of the resin. The control device of the resin molding system searches for operating conditions of a device constituting the resin molding system on the basis of the information output from the sensor unit and sets the searched operating condition as a new operating condition. Which operating conditions of which device should be changed in what way when the resin is in what state are set, for example, by the user.

## Description

### TECHNICAL FIELD

The present invention relates to a resin molding system, an operating condition control method, and a program.

### BACKGROUND ART

A resin molding system configured to melt and knead a resin raw material, cool and form the molten resin into a film shape, and stretch the formed film has been known (see, for example, Patent Document 1).

### RELATED ART DOCUMENTS

### PATENT DOCUMENTS

Patent Document 1: Japanese Unexamined Patent Application Publication No. 2007-203508

### SUMMARY OF THE INVENTION

### PROBLEMS TO BE SOLVED BY THE INVENTION

Conventionally, when a product such as a resin film is to be manufactured using a resin molding system, a user performs initial setting such as operating conditions of the system, visually checks the state of the resin after the system is activated, and adjusts the operating conditions such that the resin is in an appropriate state, based on experience and intuition.

However, the operating conditions of the resin molding system are diverse and complex. Therefore, depending on the user's skill level, it may not be possible to properly adjust the operating conditions, resulting in inconsistent product quality.

Due to the above circumstances, a technique capable of stably setting the appropriate operating conditions of the resin molding system regardless of the user's skill level has been desired.

### MEANS FOR SOLVING THE PROBLEMS

A resin molding system which is one embodiment disclosed in this application is a resin molding system including an extrusion apparatus configured to melt and knead a resin raw material and extrude a molten resin, a cooling apparatus configured to cool the extruded molten resin and form the molten resin into a resin film, and a stretching apparatus configured to stretch the formed resin film, the extrusion apparatus having a T-die attached thereto and configured to form the molten resin into a film shape and discharge it, and the cooling apparatus being provided with a cooling roll configured to send the molten resin discharged from the T-die toward the stretching apparatus while making the molten resin be in contact with a surface thereof and an air knife configured to blow air to the molten resin being in contact with the surface of the cooling roll, and the resin molding system further includes a first sensor configured to output information representing a change in a width of the molten resin between the T-die and the cooling roll, a search unit configured to search for operating conditions of the cooling apparatus under which a change in a width of the molten resin formed by the cooling apparatus satisfies a specification, based on the change in the width of the molten resin detected by the information from the first sensor, and a setting unit configured to set the searched operating conditions as new operating conditions.

An operating condition control method which is one embodiment disclosed in this application is an operating condition control method for a resin molding system including an extrusion apparatus configured to melt and knead a resin raw material and extrude a molten resin, a cooling apparatus configured to cool the extruded molten resin and form the molten resin into a resin film, and a stretching apparatus configured to stretch the formed resin film, the extrusion apparatus having a T-die attached thereto and configured to form the molten resin into a film shape and discharge it, and the cooling apparatus being provided with a cooling roll configured to send the molten resin discharged from the T-die toward the stretching apparatus while making the molten resin be in contact with a surface thereof and an air knife configured to blow air to the molten resin being in contact with the surface of the cooling roll, and the method includes detecting a change in a width of the molten resin between the T-die and the cooling roll, searching for operating conditions of the cooling apparatus under which a change in a width of the molten resin formed by the cooling apparatus satisfies a specification, based on the detected change in the width of the molten resin, and setting the searched operating conditions as new operating conditions.

A program which is one embodiment disclosed in this application is a program for a resin molding system including an extrusion apparatus configured to melt and knead a resin raw material and extrude a molten resin, a cooling apparatus configured to cool the extruded molten resin and form the molten resin into a resin film, and a stretching apparatus configured to stretch the formed resin film, the extrusion apparatus having a T-die configured to form the molten resin into a film shape and discharge it, and the cooling apparatus being provided with a cooling roll configured to send the molten resin discharged from the T-die toward the stretching apparatus while making the molten resin be in contact with a surface thereof and an air knife configured to blow air to the molten resin being in contact with the surface of the cooling roll, and the program causes a computer to function as: a search unit configured to search for operating conditions of the cooling apparatus under which a change in a width of the molten resin formed by the cooling apparatus satisfies a specification, based on information representing a change in a width of the molten resin between the T-die and the cooling roll output from a first sensor; and a setting unit configured to set the searched operating conditions as new operating conditions.

### EFFECTS OF THE INVENTION

According to one embodiment disclosed in this application, it is possible to stably set the appropriate operating conditions of the resin molding system regardless of the user's skill level.

### BRIEF DESCRIPTIONS OF THE DRAWINGS

[FIG. 1] is a diagram schematically showing a configuration of a resin molding system according to the first embodiment.
[FIG. 2] is a diagram showing an example of a hardware configuration of a control device.
[FIG. 3] is a diagram showing an example of a functional block configuration of the control device.
[FIG. 4] is a diagram schematically showing an example of a film manufacturing process by the resin molding system.
[FIG. 5] is a diagram showing an example of a process flow in the resin molding system according to the first embodiment.
[FIG. 6] is a diagram showing a configuration example of a major part related to an operating condition control of an extrusion apparatus in the resin molding system.
[FIG. 7] is a diagram showing an example of an operating condition control process flow of the extrusion apparatus.
[FIG. 8] is a diagram showing a configuration example of a major part related to an operating condition control of a cooling apparatus in the resin molding system.
[FIG. 9] is a diagram for describing a neck-in.
[FIG. 10] is a diagram for describing a resonance.
[FIG. 11] is a diagram showing a configuration example of a major part of the cooling apparatus.
[FIG. 12] is a diagram showing an example of an operating condition control process flow of the cooling apparatus.
[FIG. 13] is a diagram showing a configuration example of a major part related to an operating condition control of longitudinal and transverse stretching apparatuses in the resin molding system.
[FIG. 14] is a diagram showing a configuration example of a major part related to the operating condition control of the longitudinal and transverse stretching apparatuses in the resin molding system.
[FIG. 15] is a diagram showing an example of an operating condition control process flow of the longitudinal and transverse stretching apparatuses.
[FIG. 16] is a diagram showing a configuration example of a major part related to an operating condition control of a winder apparatus in the resin molding system.
[FIG. 17] is a diagram showing an example of an operating condition control process flow of the winder apparatus.

### DETAILED DESCRIPTION OF PREFERRED EMBODIMENTS

Hereinafter, embodiments and examples of the invention will be described in detail with reference to the drawings. Note that the components having the same function are denoted by the same reference characters in all the drawings for describing the embodiments, and the repetitive description thereof will be omitted unless otherwise required.

### (First Embodiment)

### <Configuration of Film Manufacturing System>

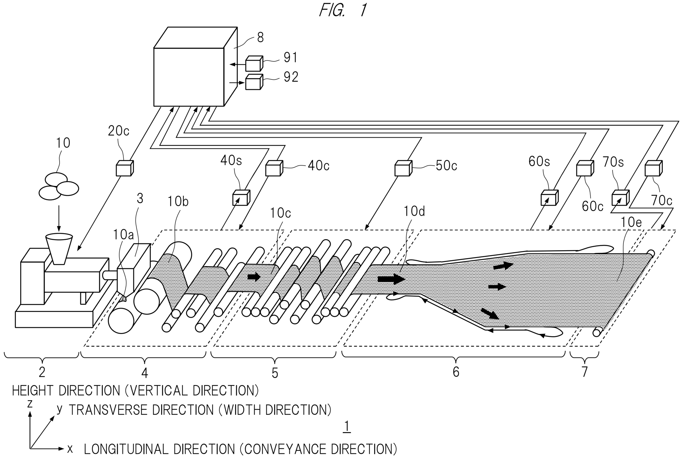

FIG. 1 is a diagram schematically showing a configuration of a resin molding system 1 according to the first embodiment. As shown in FIG. 1, the resin molding system 1 includes an extrusion apparatus 2, a T-die 3, a cooling apparatus 4, a longitudinal stretching apparatus 5, a transverse stretching apparatus 6, a winder apparatus 7, and a control device 8. Note that the cooling apparatus 4 is referred to also as a raw sheet cooling apparatus, a casting apparatus, or a film-forming apparatus.

The extrusion apparatus 2 melts and kneads a resin raw material 10 fed thereinto while heating it, and extrudes the resulting molten resin. The extrusion apparatus 2 includes an extrusion apparatus operation control unit 20c. The extrusion apparatus operation control unit 20c controls the operation of the extrusion apparatus 2 based on control signals received from the control device 8.

The T-die 3 is attached to the extrusion apparatus 2, and forms the molten resin extruded from the extrusion apparatus 2 into a film-like shape through a slit-shaped or elongated rectangular discharge port, and discharges it substantially vertically downward. There are several types of T-dies 3 available, and the suitable one is selected according to the resin raw material or the type of film to be manufactured, and is attached to the extrusion apparatus 2.

The cooling apparatus 4 cools a film-like molten resin 10a discharged from the T-die 3 and forms it into a film shape. Here, the resin formed into a film shape is referred to as a resin film. The cooling apparatus 4 conveys a cooled and formed resin film 10b to the longitudinal stretching apparatus 5. The cooling apparatus 4 includes a cooling apparatus operation control unit 40c and a cooling apparatus sensor unit 40s. The cooling apparatus operation control unit 40c controls the operation of the cooling apparatus 4 based on control signals received from the control device 8. The cooling apparatus sensor unit 40s detects the state of the molten resin 10a and resin film 10b in the cooling apparatus 4 and outputs information representing the detected state to the control device 8.

The longitudinal stretching apparatus 5 stretches a resin film 10c conveyed from the cooling apparatus 4 in a longitudinal direction x, which is the conveyance direction of the resin film 10c. Note that stretching in the longitudinal direction x is referred to as longitudinal stretching. The longitudinal stretching apparatus 5 conveys a longitudinally stretched resin film 10d to the transverse stretching apparatus 6. The longitudinal stretching apparatus 5 includes a longitudinal stretching apparatus operation control unit 50c. The longitudinal stretching apparatus operation control unit 50c controls the operation of the longitudinal stretching apparatus 5 based on control signals received from the control device 8.

The transverse stretching apparatus 6 stretches the longitudinally stretched resin film 10d, which is conveyed from the longitudinal stretching apparatus 5, in a transverse direction y, which is the width direction of the resin film 10d. Note that stretching in the transverse direction y is referred to as transverse stretching. The transverse stretching apparatus 6 conveys a transversely stretched resin film 10e to the winder apparatus 7. The transverse stretching apparatus 6 includes a transverse stretching apparatus operation control unit 60c and a transverse stretching apparatus sensor unit 60s. The transverse stretching apparatus operation control unit 60c controls the operation of the transverse stretching apparatus 6 based on control signals received from the control device 8. The transverse stretching apparatus sensor unit 60s detects the state of the resin film 10d before or during the transverse stretching in the transverse stretching apparatus 6 and the resin film 10e after the transverse stretching, and outputs information representing the detected state to the control device 8.

The winder apparatus 7 winds the transversely stretched resin film 10e conveyed from the transverse stretching apparatus 6 into a roll. The winder apparatus 7 includes a winder apparatus operation control unit 70c and a winder apparatus sensor unit 70s. The winder apparatus operation control unit 70c controls the operation of the winder apparatus 7 based on control signals received from the control device 8. The winder apparatus sensor unit 70s detects the state of the resin film 10e in the winder apparatus 7 and outputs information representing the state to the control device 8.

The control device 8 searches for appropriate operating conditions of the extrusion apparatus 2, the cooling apparatus 4, the longitudinal stretching apparatus 5, the transverse stretching apparatus 6, and the winder apparatus 7 based on the information acquired from the cooling apparatus sensor unit 40s, the transverse stretching apparatus sensor unit 60s, and the winder apparatus sensor unit 70s. The control device 8 sets the searched operating conditions as the operating conditions of each apparatus, and controls each apparatus according to the set operating conditions.

An operation unit 91 and a display unit 92 are provided in the control device 8. By operating the operation unit 91, a user can input information representing various settings, various commands, and others into the control device 8. The display unit 92 displays various kinds of information intended for the user. The operation unit 91 is constituted by, for example, a keyboard, a mouse, and the like. The display unit 92 is constituted by, for example, a liquid crystal panel, an organic EL panel, or the like. The operation unit 91 and the display unit 92 may be constituted integrally, and may be, for example, a touch panel.

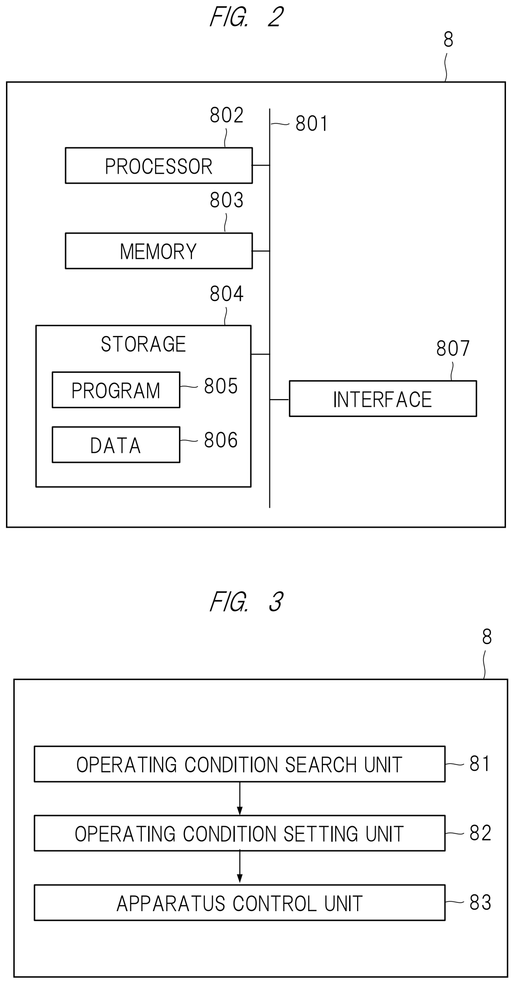

FIG. 2 is a diagram showing an example of a hardware configuration of the control device 8. The control device 8 is constituted by, for example, a computer. As shown in FIG. 2, the control device 8 includes a communication bus 801, a processor 802, a memory 803, a storage 804, and an interface 807.

The processor 802 is constituted by, for example, a CPU (Central Processing Unit), an MPU (Micro Processor Unit), an MCU (Micro Controller Unit), or the like. The memory 803 is constituted by, for example, a semiconductor storage device. The storage 804 is constituted by, for example, a semiconductor storage device, a magnetic disk storage device, an optical disk storage device, or the like.

The processor 802, the memory 803, the storage 804, and the interface 807 are each connected to the communication bus 801, so that information can be transmitted and received therebetween via the communication bus 801. The storage 804 stores various programs 805, various data 806, and the like.

The processor 802 functions as various functional blocks by reading the program 805 stored in the storage 804, loading the program into the memory 803, and executing the program.

FIG. 3 is a diagram showing an example of a functional block configuration of the control device 8. As shown in FIG. 3, the control device 8 includes, as functional blocks, an operating condition search unit 81, an operating condition setting unit 82, and an apparatus control unit 83.

The operating condition search unit 81 receives information output from the cooling apparatus sensor unit 40s, the transverse stretching apparatus sensor unit 60s, and the winder apparatus sensor unit 70s, searches for appropriate operating conditions of each apparatus based on the received information, and outputs the searched operating conditions to the operating condition setting unit 82. The appropriate operating conditions of each apparatus refer to the operating conditions of each apparatus under which the state of the resin such as the molten resin or resin film in each apparatus satisfies the set specifications, that is, the prescribed conditions and standards.

The operating condition setting unit 82 first sets the initial operating conditions of each apparatus based on the information input by the user, and then sets the operating conditions searched by the operating condition search unit 81 as the new operating conditions of each apparatus.

The apparatus control unit 83 sends control signals to the operation control units 20c, 40c, 50c, 60c, and 70c of the extrusion apparatus 2, the cooling apparatus 4, the longitudinal stretching apparatus 5, the transverse stretching apparatus 6, and the winder apparatus 7 such that these apparatuses are controlled according to the set operating conditions.

### <Resin Film Manufacturing Process>

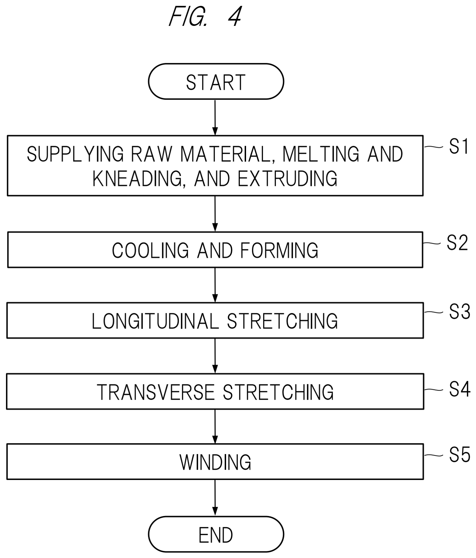

FIG. 4 is a diagram schematically showing an example of a film manufacturing process by the resin molding system 1. Here, an example of a resin film manufacturing process by the resin molding system 1 will be briefly described with reference to FIG. 4. As shown in FIG. 4, first, the resin raw material 10 made of a resin material (pellets) and additives is fed and supplied to the extrusion apparatus 2. The extrusion apparatus 2 melts and kneads the supplied resin raw material 10 and pushes it into the T-die 3. A gear pump GP is attached between the extrusion apparatus 2 and the T-die 3. The gear pump GP discharges the resin raw material 10 melted by the extrusion apparatus 2 from the T-die 3 in a stable state. The T-die 3 discharges, from the discharge port, the molten resin that has been melted, kneaded, and pushed in by the extrusion apparatus 2 (S1). The molten resin 10a discharged from the T-die 3 is cooled in the cooling apparatus 4 and formed into the resin film 10b (S2).

The resin film 10c conveyed from the cooling apparatus 4 is stretched longitudinally in the longitudinal stretching apparatus 5 (S3). The longitudinally stretched resin film 10d is stretched transversely in the transverse stretching apparatus 6 (S4). The transversely stretched resin film 10e is wound by the winder apparatus 7 (S5).

In the example shown in FIG. 1 and FIG. 4, the resin film 10c that has been cooled and formed is stretched longitudinally and then stretched transversely, but the stretching method is not limited to this. For example, the resin film may be stretched transversely and then longitudinally, longitudinal stretching and transverse stretching may be performed at the same time, or each of longitudinal stretching and transverse stretching may be performed multiple times.

Furthermore, the resin films 10b to 10e refer to resins formed into a film shape, and do not mean the names based on strict standards. The resin is assumed to be made of a so-called plastic material as a main component, but glass fibers, carbon fibers, or other fillers may be added for the purpose of improving heat deterioration resistance, strength characteristics, conductivity, slidability, and the like of the plastic material, and the resin is not limited to any specific material or composition.

### <Process Flow in Resin Molding System>

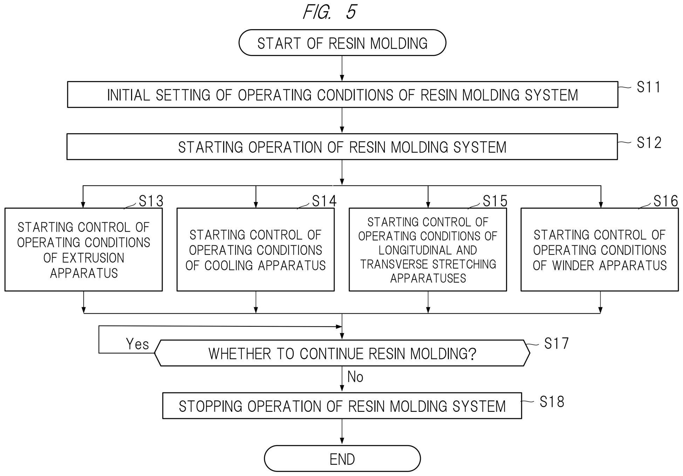

FIG. 5 is a diagram showing an example of a process flow in the resin molding system 1 according to the first embodiment.

In step S11, the initial setting of operating conditions of the resin molding system 1 is performed. Specifically, the user operates the operation unit 91 to input, to the control device 8, information representing the operating conditions of the extrusion apparatus 2, the cooling apparatus 4, the longitudinal stretching apparatus 5, the transverse stretching apparatus 6, and the winder apparatus 7. The operating condition setting unit 82 sets the operating conditions of each apparatus described above based on the input information.

In step S12, the operation of the resin molding system 1 is started. Specifically, the apparatus control unit 83 transmits control signals to the operation control units of the extrusion apparatus 2, the cooling apparatus 4, the longitudinal stretching apparatus 5, the transverse stretching apparatus 6, and the winder apparatus 7 such that each apparatus starts operating according to the set operating conditions. The operation control units of each apparatus start the operations of each apparatus under the set operating conditions based on the received control signals.

The processes of steps S13 to S16 are performed in parallel or in any predetermined order. In step S13, control of the operating conditions of the extrusion apparatus 2 is started. In step S14, control of the operating conditions of the cooling apparatus 4 is started. In step S15, control of the operating conditions of the longitudinal stretching apparatus 5 and the transverse stretching apparatus 6 is started. In step S16, control of the operating conditions of the winder apparatus 7 is started.

More specifically, the operating condition search unit 81 searches for more appropriate operating conditions of each apparatus based on the information output from the cooling apparatus sensor unit 40s, the transverse stretching apparatus sensor unit 60s, and the winder apparatus sensor unit 70s. The operating condition setting unit 82 sets the searched operating conditions as new operating conditions of each apparatus. The apparatus control unit 83 transmits control signals to the operation control units of each apparatus such that each apparatus operates according to the newly set operating conditions. Details of the control of the operating conditions of each apparatus will be described later.

In step S17, it is determined whether to continue resin molding. Specifically, the apparatus control unit 83 determines whether resin molding is continued based on the presence or absence of an error signal transmitted in the resin molding system 1, the presence or absence of a command input to stop the operation, and others. In this determination, when it is determined that the resin molding should be continued (S17: Yes), the processing step is returned to step S17 and the resin molding is continued. On the other hand, when it is determined that the resin molding should not be continued (S17: No), the processing step proceeds to step S18.

In step S18, the operation of the resin molding system 1 is stopped. Specifically, the apparatus control unit 83 transmits control signals to the operation control units of each apparatus to stop the operation of each apparatus.

### <Operating Condition Control of Extrusion Apparatus>

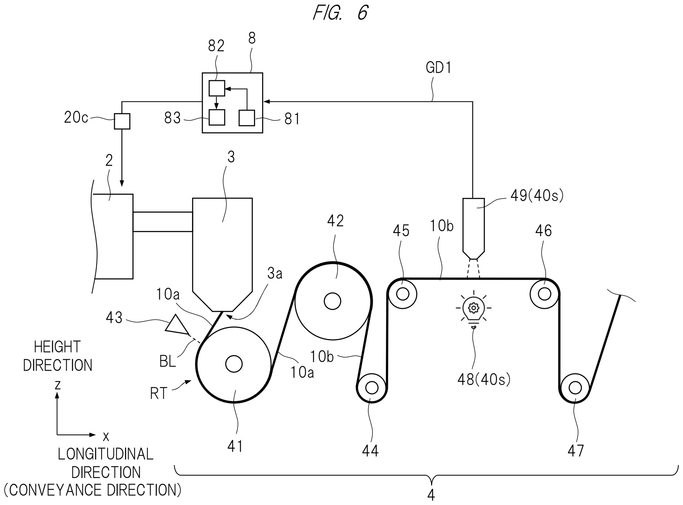

FIG. 6 is a diagram showing a configuration example of a major part related to an operating condition control of the extrusion apparatus in the resin molding system.

As shown in FIG. 6, the cooling apparatus 4 includes a first cast roll (cooling roll) 41, a second cast roll (cooling roll) 42, an air nozzle (air knife) 43, conveyance rolls 44 to 47, a light source (sensor unit) 48, and a gel counter (sensor unit) 49. The light source 48 and the gel counter 49 are a part of the cooling apparatus sensor unit 40s. The first cast roll 41 is disposed below the discharge port 3a of the T-die 3, and the second cast roll 42 is disposed diagonally upward from the first cast roll 41 toward the downstream side in the longitudinal direction x. The conveyance roll 44 is disposed diagonally downward from the second cast roll 42 toward the further downstream side. The conveyance rolls 45 and 46 are disposed diagonally upward from the conveyance roll 44 toward the downstream side so as to be arranged horizontally side by side. Also, the conveyance roll 47 is disposed diagonally downward from the conveyance roll 46 toward the downstream side. Note that the overall arrangement of the cooling apparatus 4, the arrangement of the first and second cast rolls 41 and 42, and the arrangement of the conveyance rolls 45 and 46 are examples for performing the operating condition control of the extrusion apparatus 2, and are not particularly limited.

A first cast roll temperature RT1, which is the temperature of the first cast roll 41, is controlled to be maintained at a set temperature. Also, the first cast roll 41 is controlled to rotate at a set rotation speed. Some or all of the second cast roll 42 and the conveyance rolls 44 to 47 are controlled to rotate at respectively set rotation speeds and maintain set temperatures.

The molten resin 10a extruded from the extrusion apparatus 2 and discharged from the discharge port 3a of the T-die 3 substantially vertically downward is cooled by coming into contact with the surface of the first cast roll 41 and is also cooled by blown air BL from the air nozzle 43, thereby being formed into a film shape. The resin film 10b obtained by cooling and forming the molten resin 10a passes along the lower side of the first cast roll 41 and is conveyed while being in contact with the surface on the upper side of the second cast roll 42. The resin film 10b conveyed by the second cast roll 42 passes along the lower side of the conveyance roll 44, passes along the upper side of the conveyance rolls 45 and 46, is guided to pass along the lower side of the conveyance roll 47, and is then conveyed to the longitudinal stretching apparatus 5.

The specifications of a camera of the gel counter 49 differ depending on whether the resin film 10b conveyed by the second cast roll 42 is transparent or non-transparent. For example, when the resin film 10b is transparent, the gel counter 49 performs gel counting by a transmission method. In the region between the conveyance roll 45 and the conveyance roll 46, the light source 48 is disposed below the resin film 10b, and the gel counter 49 is disposed above the resin film 10b. The light source 48 emits light toward the resin film 10b. The gel counter 49 captures an image of the resin film 10b formed by the light emitted from the light source 48 and transmitted through the resin film 10b. The gel counter 49 repeats the image capture multiple times while the resin film 10b is being conveyed. On the other hand, when the resin film 10b is non-transparent, the light source 48 is arranged on the lateral side of the gel counter 49, and the light from the light source 48 is reflected by the resin film 10b. The gel counter 49 performs gel counting based on the reflected light (reflection method). The other positions of the conveyance rolls 44 to 47 and the first and second cast rolls 41 and 42 are the same as in the case of the transmission method. Therefore, in order to make it possible to perform gel counting in both the transmission method and the reflection method, the light source may be provided at two places, for example, below the resin film 10b and on the lateral side of the gel counter 49.

The gel counter 49 analyzes the image obtained by the image capture, detects foreign matters contained in the resin film 10b, and outputs output information GD1 related to the detected foreign matters to the control device 8. Here, the foreign matters include gel that is the remaining unmelted resin raw material 10, spots in which the thickness or color of the resin differs from the surroundings, and others. The output information GD1 output from the gel counter 49 includes information representing the number of foreign matters in the image capture region of the resin film 10b, the size of respective foreign matters, the color of respective foreign matters, and the like.

Note that an area of the image capture region of the gel counter 49 can be determined from the installation conditions and settings of the gel counter 49. Therefore, the number of foreign matters in the image capture region can be converted into the number of foreign matters per unit area. The size of the foreign matters is expressed by, for example, the maximum width, average radius, area, and others of the foreign matters. The color of the foreign matters is expressed by, for example, the component ratio of red, green, and blue, which are the three primary colors of light, the color temperature, and others.

The presence of foreign matters in the resin film 10b described above decreases the quality of the resin film, and such foreign matters should be reduced. Furthermore, according to the knowledge of the inventors, a correlation is found between the occurrence state of foreign matters and the operating conditions of the extrusion apparatus 2. Therefore, the operating condition search unit 81 of the control device 8 searches for operating conditions of the extrusion apparatus 2 under which the foreign matters can be reduced and the set specifications, that is, the prescribed conditions are satisfied, based on the output information GD1 from the gel counter 49.

The extrusion apparatus 2 introduces the supplied resin raw material 10 into a cylinder, heats it inside the cylinder, melts and kneads the resin raw material 10 by rotating the screw inside the cylinder, and extrudes the resulting molten resin 10a to the T-die 3 to discharge it from the discharge port 3a. Therefore, the multiple parameters that constitute the operating conditions of the extrusion apparatus 2 include, for example, a cylinder temperature ST, a screw rotation speed SN, a resin extrusion rate PV, a cylinder tip (gear pump upstream) pressure Pgt, a gear pump downstream pressure Pgb, and a T-die upstream pressure Pd. The cylinder temperature is the temperature inside the cylinder. The screw rotation speed is the number of rotations of the screw per unit time. The resin extrusion rate is the amount of molten resin extruded per unit time. Note that the screw may be of a single-screw type or a multi-screw type. The gear pump upstream pressure, that is, the cylinder tip pressure Pgt indicates fluctuations due to surging and uneven discharge of the extrusion apparatus 2. In addition, the gear pump downstream pressure Pgb is a parameter for producing a sheet (film-like molten resin) having a stable thickness from the T-die 3 by using the gear pump to eliminate the influences of pressure fluctuations caused by surging and uneven discharge of the extrusion apparatus 2. The operating condition search unit 81 determines new parameter values for at least one of these multiple parameters.

Hereinafter, the operating condition control process of the extrusion apparatus 2 will be described.

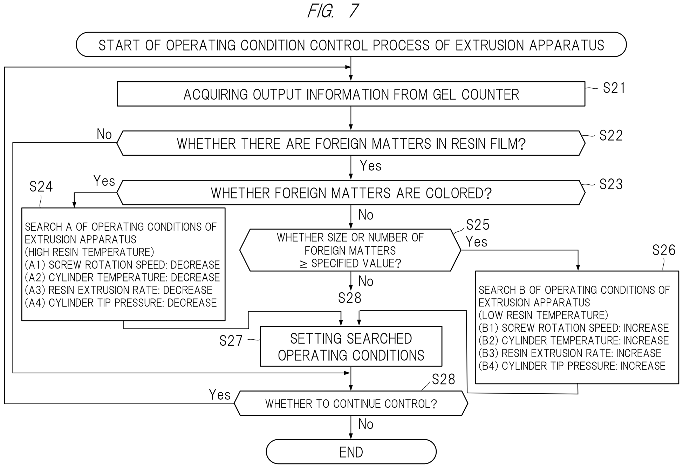

FIG. 7 is a diagram showing an example of an operating condition control process flow of the extrusion apparatus. As shown in FIG. 7, in step S21, output information from the gel counter 49 is acquired. Specifically, the operating condition search unit 81 acquires the output information GD1 from the gel counter 49.

In step S22, it is determined whether or not there are foreign matters in the resin film. Specifically, the operating condition search unit 81 determines whether or not there are foreign matters in the resin film 10b based on the output information GD1 of the gel counter 49. Here, when it is determined that there are foreign matters (S22: Yes), the processing step proceeds to step S23. On the other hand, when it is determined that there is no foreign matter (S22: No), the processing step proceeds to step S28.

In step S23, it is determined whether the foreign matters are colored. Specifically, the operating condition search unit 81 determines that the foreign matters are colored when the color of at least one of the detected foreign matters differs by a certain level or more from the original color of the resin or the color of the surroundings of the foreign matter, based on the output information GD1 of the gel counter 49. Here, when it is determined that the foreign matters are colored (S23: Yes), the processing step proceeds to step S24.

On the other hand, the operating condition search unit 81 determines that the foreign matters are not colored when the color of all of the detected foreign matters does not differ by a certain level or more from the original color of the resin or the color of the surroundings of the foreign matter, that is, when the color difference is less than a certain level. When it is determined that the foreign matters are not colored (S23: No), the processing step proceeds to step S25.

In step S24, the appropriate operating conditions of the extrusion apparatus are searched for (search A). Specifically, the operating condition search unit 81 searches for operating conditions of the extrusion apparatus 2 under which the resin temperature is lowered, based on the output information GD1 of the gel counter 49. The reason for performing such a search is that it is presumed that the resin temperature is excessively high and a part of the resin is burned and discolored when the foreign matters are colored.

The operating condition search unit 81 selects at least one of the following change candidates (A1) to (A4) for the multiple parameters that constitute the operating conditions of the extrusion apparatus 2, for example. Then, based on the selected change candidate, the operating condition search unit 81 determines new parameter values for at least one of the multiple parameters that constitute the operating conditions of the extrusion apparatus 2, and outputs the determined new parameter values as the search result.
(A1) Decrease the screw rotation speed SN.
(A2) Decrease the cylinder temperature ST.
(A3) Decrease the resin extrusion rate PV.
(A4) Decrease the cylinder tip pressure Pgt.

Note that the operating condition search unit 81 determines at least one parameter to be changed and the parameter values thereof for at least two of these multiple parameters based on the set priority order, the settable range of parameter values, the determination sequence or determination algorithm, and others. The settable range specifies, for the parameters that constitute the operating conditions, the range of parameter values that can be set and the allowable change amount or change rate of the parameter values. The determination sequence or determination algorithm specifies which operating conditions, that is, parameters of which apparatus should be changed, how operating conditions should be changed, and in what state of the resin the operating conditions should be changed.

The priority order for these multiple parameters, the settable range of parameter values for various parameters, the determination sequence or determination algorithm, and others may be set in advance based on the overall knowledge, past performance, and accumulated know-how of those involved in resin molding, or may be arbitrarily set by the user.

In addition, the operating condition search unit 81 may use artificial intelligence to determine the type of parameters to be changed and the parameter values thereof, for example. This artificial intelligence may have, for example, priority order for parameters, settable range of parameter values, determination sequence or determination algorithm, and others set for at least two of the various parameters listed in the above-mentioned change candidates (A1) to (A3). Also, this artificial intelligence may be one that has been trained for at least one of the various parameters listed in the change candidates (A1) to (A4), for example, based on the relationship between the change in parameter values and the change in the state of foreign matters contained in the resin film.

When the search A for the operating conditions of the extrusion apparatus in step S24 is completed, the processing step proceeds to step S27.

In step S25, it is determined whether the size or number of foreign matters is equal to or larger than a specified value. Specifically, the operating condition search unit 81 determines that the size or number of foreign matters is equal to or larger than the specified value based on the output information GD1 from the gel counter 49, when at least one foreign matter having a size equal to or larger than a set specified size (first size) Z1 is present among the detected foreign matters, or when the number of foreign matters detected in the image capture region or per unit area is equal to or larger than a set specified number (first number) N1. Here, when it is determined that the size or number of foreign matters is equal to or larger than the specified value (S25: Yes), the processing step proceeds to step S26.

On the other hand, the operating condition search unit 81 determines that the size or number of foreign matters is not equal to or larger than the specified value when no foreign matter having the size equal to or larger than the specified size Z1 is present among the detected foreign matters and the number of detected foreign matters is less than the specified number N1. When it is determined that the size or number of foreign matters is not equal to or larger than the specified value (S25: No), the processing step proceeds to step S28.

In step S26, the appropriate operating conditions of the extrusion apparatus are searched for (search B). Specifically, the operating condition search unit 81 searches for operating conditions of the extrusion apparatus 2 under which the resin temperature increases, based on the output information GD1 of the gel counter 49. The reason for performing such a search is that it is presumed that the resin temperature is excessively low and some of the raw resin material remains unmelted when the foreign matters are not colored and the size or number of the foreign matters is equal to or larger than a specified value.

The operating condition search unit 81 selects at least one of the following change candidates (B1) to (B4) for the multiple parameters that constitute the operating conditions of the extrusion apparatus 2, for example. Then, based on the selected change candidate, the operating condition search unit 81 determines new parameter values for at least one of the multiple parameters that constitute the operating conditions of the extrusion apparatus 2, and outputs the determined new parameter values as the search result.
(B1) Increase the screw rotation speed SN.
(B2) Increase the cylinder temperature ST.
(B3) Increase the resin extrusion rate PV.
(B4) Increase the cylinder tip pressure Pgt.

Note that the operating condition search unit 81 determines at least one parameter to be changed and the parameter values thereof for at least two of these multiple parameters based on the set priority order, the settable range of parameter values, the determination sequence or determination algorithm, and others.

The priority order for these multiple parameters, the settable range of parameter values for various parameters, the determination sequence or determination algorithm, and others may be set in advance based on the overall knowledge, past performance, and accumulated know-how of those involved in resin molding, or may be arbitrarily set by the user.

In addition, the operating condition search unit 81 may use artificial intelligence to determine the type of parameters to be changed and the parameter values thereof, for example. This artificial intelligence may have, for example, priority order for parameters, settable range of parameter values, determination sequence or determination algorithm, and others set for at least two of the various parameters listed in the above-mentioned change candidates (B1) to (B4). Also, this artificial intelligence may be one that has been trained for at least one of the various parameters listed in the change candidates (B1) to (B4), for example, based on the relationship between the change in parameter values and the change in the state of foreign matters contained in the resin film.

When the search B for the operating conditions of the extrusion apparatus 2 in step S26 is completed, the processing step proceeds to step S27.

In step S27, the searched operating conditions are set. Specifically, the operating condition setting unit 82 changes and resets the operating conditions of the extrusion apparatus 2 to the searched new operating conditions. The apparatus control unit 83 transmits control signals to the extrusion apparatus operation control unit 20c such that the extrusion apparatus 2 is operated according to the set new operating conditions.

In step S28, it is determined whether to continue the control of the operating conditions of the extrusion apparatus. Specifically, the apparatus control unit 83 determines whether to continue the control of the operating conditions of the extrusion apparatus 2 based on the presence or absence of an error signal issued in the resin molding system 1, the presence or absence of a command input for stopping the production, and the like. In this determination, when it is determined that the control is to be continued (S28: Yes), the processing step returns to S21 and the control is continued. On the other hand, when it is determined that the control is not to be continued (S28: No), the control process ends.

### <Operating Condition Control of Cooling Apparatus>

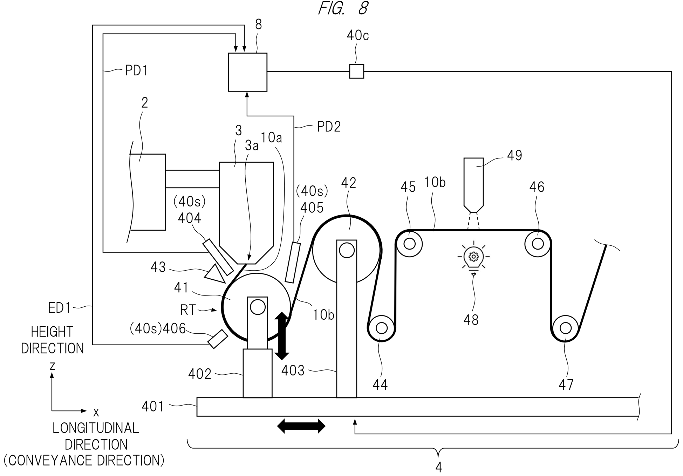

FIG. 8 is a diagram showing a configuration example of a major part related to an operating condition control of the cooling apparatus in the resin molding system.

As shown in FIG. 8, the cooling apparatus 4 includes the first cast roll 41, the second cast roll 42, the air nozzle 43, and the conveyance rolls 44 to 47. Also, the cooling apparatus 4 includes a height adjustment mechanism 402 that enables the height adjustment of the first cast roll 41, a support unit 403 that supports the conveyance rolls 44 to 47, and a support base 401 that supports the height adjustment mechanism 402 and the support unit 403. In addition, the cooling apparatus 4 includes a height adjustment mechanism 407 that enables the height adjustment of the second cast roll 42. The support base 401 is configured to be slidable in the longitudinal direction x. The cooling apparatus 4 further includes a first camera (first sensor) 404, a second camera (first sensor) 405, and a thermograph (second sensor) 406. These cameras are, for example, equipped with semiconductor image sensors and can capture videos or images at high speed. The first camera 404, the second camera 405, and the thermograph 406 are a part of the cooling apparatus sensor section 40s.

The first camera 404 captures an image of the molten resin 10a in the region between the discharge port 3a of the T-die 3 and the surface of the first cast roll 41 with which the molten resin 10a discharged from the discharge port 3a comes into contact, and outputs first image information PD1, which is the acquired image information, to the control device 8. The second camera 405 captures an image of the resin film 10b cooled and formed by the first cast roll 41 and the air nozzle 43, and outputs second image information PD2, which is the acquired image information, to the control device 8. The thermograph 406 measures the surface temperature of the molten resin 10a being cooled on the surface of the first cast roll 41, that is, the molten resin 10a passing through the first cast roll 41, and outputs resin temperature information ED1, which is the information representing the measured temperature, to the control device 8.

The first camera 404 and the second camera 405 repeatedly capture images while the resin film 10b formed by cooling the molten resin 10a is being conveyed. Also, the thermograph 406 repeatedly measures the temperature while the resin film 10b is being conveyed. Note that the thermograph 406 is an example of a device that measures the surface temperature of the molten resin 10a being cooled on the surface of the first cast roll 41, and is not limited to this. In other words, for example, an infrared camera or a non-contact thermometer may be used instead of the thermograph 406.

The first image information PD1 includes information representing the change in the width of the molten resin 10a between the T-die 3 and the first cast roll 41. In other words, it is possible to recognize a phenomenon referred to as a neck-in based on the first image information PD1. Here, the neck-in will be briefly described.

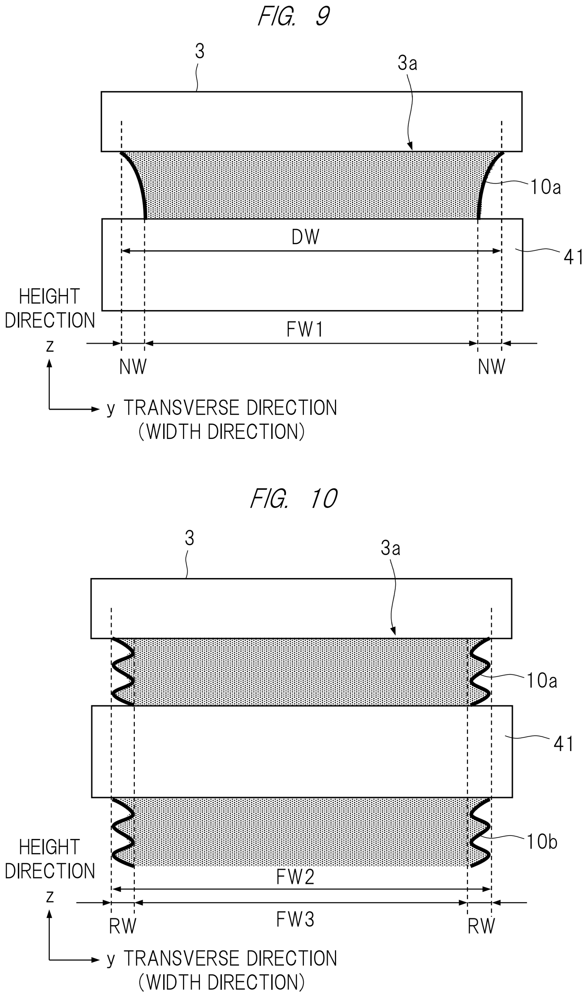

FIG. 9 is a diagram for describing the neck-in. As shown in FIG. 9, the neck-in refers to the phenomenon in which the width of the molten resin 10a from when it is discharged from the discharge port 3a of the T-die 3 until it comes into contact with the first cast roll 41 gradually shrinks to be narrower than a die width DW, which is the width of the discharge port 3a. Here, the width of the molten resin 10a at the time when it comes into contact with the first cast roll 41 is defined as a resin width FW1. Assuming that the change in the width of the molten resin 10a is symmetrical on the left and right sides, then the following relationship holds: die width DW - resin width FW1 - neck-in reduction width (reduction width) NW × 2.

The second image information PD2 includes information representing the change or variation in the width of the molten resin 10a between the T-die 3 and the first cast roll 41 or information representing the change or variation in the width of the resin film 10b between the first cast roll 41 and the second cast roll 42. In other words, it is possible to recognize a phenomenon referred to as a so-called draw resonance or simply as resonance based on the second image information PD2. Here, the resonance will be briefly described.

FIG. 10 is a diagram for describing the resonance. As shown in FIG. 10, the resonance refers to the phenomenon in which the thickness of both ends of the molten resin 10a discharged from the discharge port 3a of the T-die 3 periodically fluctuates, causing the width of the molten resin 10a or the resin film 10b to periodically fluctuate. Here, the largest width of the molten resin 10a or resin film 10b is defined as the maximum resin width FW2, and the smallest width thereof is defined as the minimum resin width FW3. Assuming that the fluctuation in the width of the molten resin 10a or resin film 10b is symmetrical on the left and right sides, then the following relationship holds: maximum resin width FW2 - minimum resin width FW3 = resonance fluctuation width (fluctuation width) RW × 2.

Each of the neck-in reduction width NW of the molten resin 10a and the resonance fluctuation width RW of the molten resin 10a or the resin film 10b should satisfy the set specifications, that is, fall within a set specified range. In addition, the temperature of the molten resin 10a located on the surface of the first cast roll 41 should satisfy the set specifications, that is, fall within a set specified range. Further, according to the knowledge of the inventors, a correlation is found between the states of neck-in, resonance, and resin temperature, and the operating conditions of the cooling apparatus 4.

Thus, the operating condition search unit 81 of the control device 8 searches for operating conditions of the cooling apparatus 4 under which each of the neck-in reduction width NW of the molten resin 10a, the resonance fluctuation width RW of the resin film 10b, and the temperature of the molten resin 10a when it passes through the first cast roll 41 falls within the set specified ranges, based on the first image information PD1, the second image information PD2, and the resin temperature information ED1. Here, a configuration example of the major part of the cooling apparatus 4 and a specific example of the operating conditions will be described.

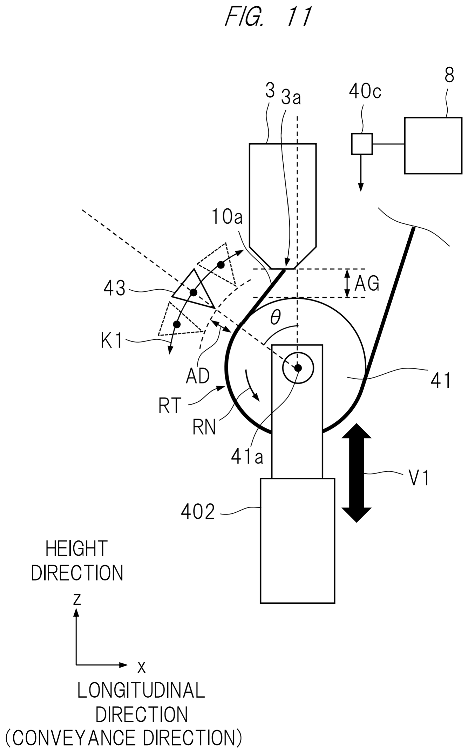

FIG. 11 is a diagram showing a configuration example of the major part of the cooling apparatus. As shown in FIG. 11, the first cast roll 41 is mechanically connected to the height adjustment mechanism 402, and the height adjustment mechanism 402 is driven by a drive device such as a motor. In this example, this drive device is included in the cooling apparatus operation control unit 40c. The height of the first cast roll 41 can be adjusted as indicated by an arrow V1 by controlling the drive device of the height adjustment mechanism 402. Also, the position of the T-die 3 is assumed to be fixed.

Here, the distance between the T-die 3 and the first cast roll 41 in the height direction z is defined as an air gap (first distance) AG. Then, the air gap AG can be adjusted by adjusting the height of the first cast roll 41. Also, the temperature of the first cast roll 41 itself is defined as the first cast roll temperature RT1, and the rotation speed of the first cast roll 41 is defined as a first cast roll rotation speed RN1. Then, the first cast roll temperature RT1 and the first cast roll rotation speed RN1 can be adjusted by changing the settings of the temperature and rotation speed, which are the operating conditions of the first cast roll 41. The temperature of the second cast roll 42 itself is defined as a second cast roll temperature RT2, and the rotation speed of the second cast roll 42 is defined as a second cast roll rotation speed RN2. The second cast roll rotation speed RN2 may be controlled in synchronization with the first cast roll rotation speed RN1, or the film may be stretched in the longitudinal direction (conveyance direction) by the speed difference between the first cast roll and the second cast roll. The second cast roll temperature RT2 and the second cast roll rotation speed RN2 can be adjusted by changing the settings of the temperature and rotation speed, which are the operating conditions of the second cast roll 42.

The air nozzle 43 is configured such that its arrangement can be changed in the xz plane along an arc K1 of a circle centered on a rotation axis 41a of the first cast roll 41. Here, the acute angle formed in the xz plane by a vertical line passing through the rotation axis 41a and a line passing through the rotation axis 41a and a reference position of the air nozzle 43 is defined as an air nozzle arrangement angle θ. The air nozzle 43 is mechanically connected to an angle change mechanism that can change the air nozzle arrangement angle θ, and the angle change mechanism is driven by a drive device such as a motor. In this example, this drive device is included in the cooling apparatus operation control unit 40c.

The air nozzle arrangement angle θ can be adjusted by controlling the drive device of the angle change mechanism. When the air nozzle arrangement angle θ is reduced, the air nozzle 43 moves toward the upstream side of the molten resin 10a, and the air blowing position by the air nozzle 43 moves toward the upstream side of the molten resin 10a. Conversely, when the air nozzle arrangement angle θ is increased, the air nozzle 43 moves toward the downstream side of the molten resin 10a, and the air blowing position by the air nozzle 43 moves toward the downstream side of the molten resin 10a.

Also, the air nozzle 43 is configured such that its arrangement can be changed in the xz plane along the radial direction centered on the rotation axis 41a. Here, the distance between the air nozzle 43 and the molten resin 10a on the surface of the first cast roll 41 in the xz plane is defined as an air-nozzle-to-resin distance (second distance) AD. The air nozzle 43 is mechanically connected to a distance change mechanism that can change the air-nozzle-to-resin distance AD, and the distance change mechanism is driven by a drive device such as a motor. In this example, this drive device is included in the cooling apparatus operation control unit 40c. The air-nozzle-to-resin distance AD can be adjusted by controlling the drive device of the distance change mechanism.

The multiple parameters that constitute the operating conditions of the cooling apparatus 4 include, for example, the first cast roll rotation speed RN1, the air nozzle arrangement angle θ, the air-nozzle-to-resin distance AD, the air gap AG, the first cast roll temperature RT1, the second cast roll rotation speed RN2, and the second cast roll temperature RT2. The operating condition search unit 81 determines new parameter values for at least one of these multiple parameters.

Hereinafter, the operating condition control process of the cooling apparatus 4 will be described.

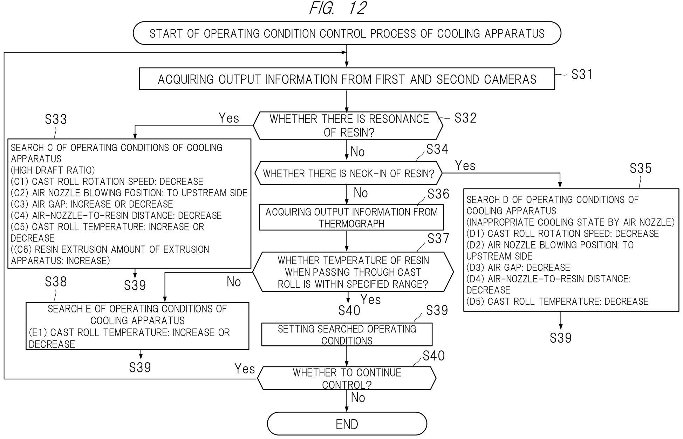

FIG. 12 is a diagram showing an example of an operating condition control process flow of the cooling apparatus. As shown in FIG. 12, in step S31, output information from the first and second cameras is acquired. Specifically, the operating condition search unit 81 acquires the first image information PD1 from the first camera 404 and acquires the second image information PD2 from the second camera 405.

In step S32, it is determined whether or not there is the resonance in the molten resin or resin film. Specifically, the operating condition search unit 81 analyzes the first image information PD1 or the second image information PD2 to identify the resonance fluctuation width RW of the molten resin 10a or the resin film 10b. When the identified resonance fluctuation width RW is equal to or larger than the set specified width (first width) W1, the operating condition search unit 81 determines that there is the resonance. When it is determined that there is the resonance (S32: Yes), the processing step proceeds to step S33. On the other hand, when the identified resonance fluctuation width RW is less than the set specified width W1, the operating condition search unit 81 determines that there is no resonance. When it is determined that there is no resonance (S32: No), the processing step proceeds to step S34.

In step S33, more appropriate operating conditions of the cooling apparatus are searched for (search C). Specifically, the operating condition search unit 81 searches for operating conditions of the cooling apparatus 4 under which a draft ratio is lowered. The draft ratio is the ratio of a T-die discharge port speed Vs to a film take-up speed Vr by the roll, and is expressed as Vr/Vs. The reason for performing the search for making the draft ratio lower as described above is that it is presumed that the draft ratio is excessively high when it is determined that there is the resonance.

The operating condition search unit 81 selects at least one of the following change candidates (C1) to (C6) for the multiple parameters that constitute the operating conditions of the cooling apparatus 4, for example. Then, based on the selected change candidate, the operating condition search unit 81 determines new parameter values for at least one of the multiple parameters that constitute the operating conditions of the cooling apparatus 4, and outputs the determined new parameter values as the search result.
(C1) Decrease the first cast roll rotation speed RN1 and the second cast roll rotation speed RN2.
(C2) Decrease the air nozzle arrangement angle θ (move the air blowing position toward upstream side).
(C3) Increase or decrease the air gap AG.
(C4) Decrease the air-nozzle-to-resin distance AD.
(C5) Increase or decrease the first cast roll temperature RT1.
(C6) Increase the amount of molten resin extruded by the extruder apparatus 2 (increase the discharge rate of the molten resin from the T-die 3).

Note that the operating condition search unit 81 determines at least one parameter to be changed and the parameter values thereof for at least two of these multiple parameters based on the set priority order, the settable range of parameter values, the determination sequence or determination algorithm, and others.

The priority order for these multiple parameters, the settable range of parameter values, the determination sequence or determination algorithm, and others may be set in advance based on the overall knowledge, past performance, and accumulated know-how of those involved in resin molding, or may be arbitrarily set by the user.

In addition, the operating condition search unit 81 may use artificial intelligence to determine the type of parameters to be changed and the parameter values thereof, for example. This artificial intelligence may have, for example, priority order, settable range of parameter values, determination sequence or determination algorithm, and others set for at least two of the multiple parameters listed in the above-mentioned change candidates (C1) to (C6). Also, this artificial intelligence may be one that has been trained for at least one of the various parameters listed in the change candidates (C1) to (C6), for example, based on the relationship between the change in parameter values and the change in the state of resonance in the resin film.

When the search C for the operating conditions of the cooling apparatus 4 in step S33 is completed, the processing step proceeds to step S39.

In step S34, it is determined whether or not there is a neck-in of the molten resin. Specifically, the operating condition search unit 81 analyzes the first image information PD1 to identify the neck-in reduction width NW of the molten resin 10a, and it is determined that there is the neck-in when the identified neck-in reduction width NW is equal to or larger than the set specified width W2. On the other hand, when the identified neck-in reduction width NW is less than the set specified width W2, the operating condition search unit 81 determines that there is no neck-in. When it is determined that there is the neck-in (S34: Yes), the processing step proceeds to step S35. When it is determined that there is no neck-in (S34: No), the processing step proceeds to step S36.

In step S35, appropriate operating conditions of the cooling apparatus are searched for (search D). Specifically, the operating condition search unit 81 searches for operating conditions of the cooling apparatus 4 under which the cooling state by the air blown from the air nozzle 43 changes. The reason for performing such a search is that it is presumed that the cooling state by the air blown from the air nozzle 43 is inappropriate when it is determined that there is the neck-in. The multiple parameters that constitute the operating conditions of the cooling apparatus 4 include, for example, the first cast roll rotation speed RN1, the second cast roll rotation speed RN2, the air nozzle arrangement angle θ, the air gap AG, the air-nozzle-to-resin distance AD, the first cast roll temperature RT1, and the second cast roll temperature RT2.

The operating condition search unit 81 selects at least one of the following change candidates for the multiple parameters that constitute the operating conditions of the cooling apparatus 4, for example. Then, based on the selected change candidate, the operating condition search unit 81 determines new parameter values for at least one of the multiple parameters that constitute the operating conditions of the cooling apparatus 4, and outputs the determined new parameter values as the search result.
(D1) Decrease the first cast roll rotation speed RN1 and the second cast roll rotation speed RN2.
(D2) Decrease the air nozzle arrangement angle θ (move the air blowing position toward the upstream side).
(D3) Decrease the air gap AG.
(D4) Decrease the air-nozzle-to-resin distance AD.
(D5) Decrease the first cast roll temperature RT1.

Note that the operating condition search unit 81 determines at least one parameter to be changed and the parameter values thereof for at least two of these multiple parameters based on the set priority order, the settable range of parameter values, the determination sequence or determination algorithm, and others.

The priority order for these multiple parameters, the settable range of parameter values, the determination sequence or determination algorithm, and others may be set in advance based on the overall knowledge, past performance, and accumulated know-how of those involved in resin molding, or may be arbitrarily set by the user.

In addition, the operating condition search unit 81 may use artificial intelligence to determine the type of parameters to be changed and the parameter values thereof, for example. This artificial intelligence may have, for example, priority order, settable range of parameter values, determination sequence or determination algorithm, and others set for at least two of the multiple parameters listed in the above-mentioned change candidates (D1) to (D5). This artificial intelligence may be one that has been trained for at least one of the various parameters listed in the change candidates (D1) to (D5), for example, based on the relationship between the change in parameter values and the change in the state of neck-in in the resin film.

When the search D for the operating conditions of the cooling apparatus 4 in step S35 is completed, the processing step proceeds to step S39.

In step S36, output information from the thermograph is acquired. Specifically, the operating condition search unit 81 acquires the resin temperature information ED1 from the thermograph 406.

In step S37, it is determined whether the temperature of the resin film 10b when it passes through the first cast roll is within a specified range. Specifically, the operating condition search unit 81 analyzes the resin temperature information ED1 to identify a resin temperature PT of the molten resin 10a when it passes through the first cast roll 41. When the identified resin temperature PT is within a set specified temperature range (temperature range) TR1, the operating condition search unit 81 determines that the temperature of the molten resin 10a when it passes through the first cast roll is within the specified range. On the other hand, when the identified resin temperature PT is outside the set specified temperature range TR1, the operating condition search unit 81 determines that the temperature of the molten resin 10a when it passes through the first cast roll is outside the specified range. When it is determined that the temperature of the molten resin 10a when it passes through the first cast roll is within the specified range (S37: Yes), the processing step proceeds to step S40. When it is determined that the temperature of the molten resin 10a when it passes through the first cast roll is outside the specified range (S37: No), the processing step proceeds to step S38.

In step S38, appropriate operating conditions of the cooling apparatus are searched for (search E). Specifically, the operating condition search unit 81 searches for operating conditions of the cooling apparatus 4 under which the first cast roll temperature RT1 changes to fall within the specified temperature range TR1. The reason for performing such a search is that it is presumed that the first cast roll temperature RT1 itself is inappropriate when the temperature of the molten resin 10a when it passes through the first cast roll is outside the specified range. When the first cast roll temperature RT1 is changed, the second cast roll temperature RT2 is also changed to the same temperature.

The operating condition search unit 81 determines new parameter values for the parameters that constitute the operating conditions of the cooling apparatus 4 based on the following change candidate (E1) for the parameters that constitute the operating conditions of the cooling apparatus 4, for example, and outputs the determined new parameter values as the search result.

(E1) Increase or decrease the first cast roll temperature RT1 and the second cast roll temperature RT2 to the same temperature.

Note that how much the change amount or change rate is to be allowed for the item of the change candidate (E1) of the parameter may be set in advance based on the overall knowledge, past performance, and accumulated know-how of those involved in resin molding, or may be arbitrarily set by the user.

In addition, the operating condition search unit 81 may use artificial intelligence to determine the parameter values, for example. This artificial intelligence may be one that has been trained, for example, based on the relationship between the change in parameter values of the parameter listed as the change candidate (E1) and the change in temperature of the molten resin 10a when it passes through the cast roll.

When the search E for the operating conditions of the cooling apparatus 4 in step S38 is completed, the processing step proceeds to step S39.

In step S39, the searched operating conditions are set. Specifically, the operating condition setting unit 82 changes and resets the operating conditions of the cooling apparatus 4 to the searched operating conditions. The apparatus control unit 83 transmits control signals to the cooling apparatus operation control unit 40c such that the cooling apparatus 4 is operated according to the newly set operating conditions.

In step S40, it is determined whether to continue the control of the operating conditions of the cooling apparatus. Specifically, the apparatus control unit 83 determines whether to continue the control of the operating conditions of the cooling apparatus 4 based on the presence or absence of an error signal issued in the resin molding system 1, the presence or absence of a command input for stopping the production, and the like. In this determination, when it is determined that the control is to be continued (S40: Yes), the processing step returns to S31 and the control is continued. On the other hand, when it is determined that the control is not to be continued (S40: No), the control process ends.

### <Operating Condition Control of Longitudinal and Transverse Stretching Apparatuses>

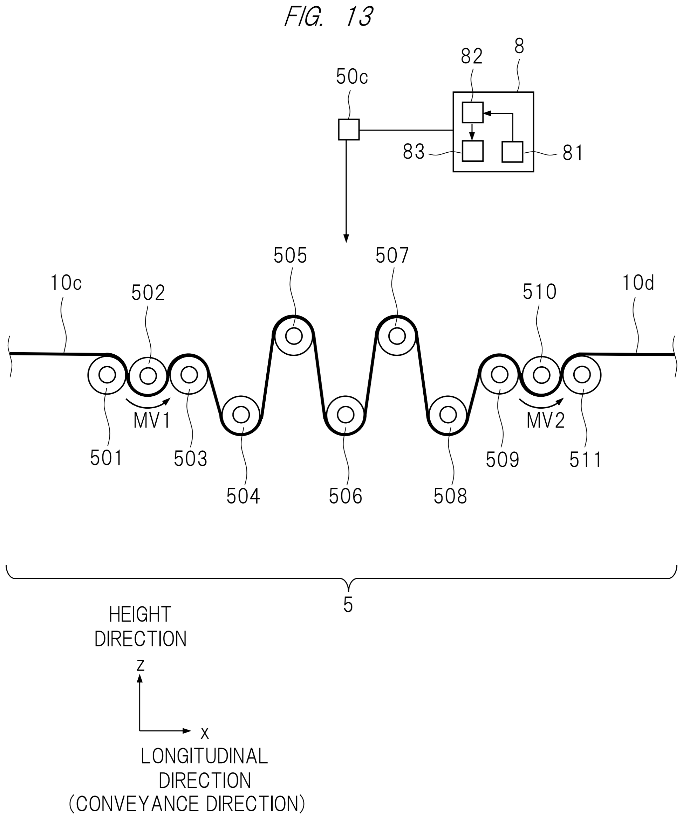

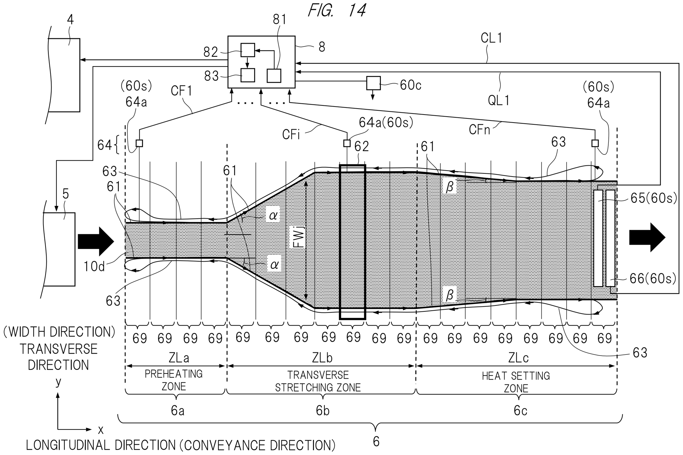

FIG. 13 and FIG. 14 are diagrams showing configuration examples of major parts related to an operating condition control of the longitudinal and transverse stretching apparatuses in the resin molding system. FIG. 13 mainly shows the configuration example of the longitudinal stretching apparatus, and FIG. 14 mainly shows the configuration example of the transverse stretching apparatus.

As shown in FIG. 13, the longitudinal stretching apparatus 5 includes preheating rolls 501 to 504, stretching rolls 505 to 507, and cooling rolls 509 to 511. These rolls are disposed in order from the upstream side to the downstream side in the conveyance direction of the resin film 10c, that is, in the longitudinal direction x. The resin film 10c sent from the cooling apparatus 4 is preheated by the preheating rolls 501 to 503, passes through a guide roll, and is then longitudinally stretched by the stretching rolls 505 to 507. The resin film 10d after being longitudinally stretched passes through the cooling rolls 509 to 511 and is conveyed to the transverse stretching apparatus 6.

In the example of FIG. 13, the preheating rolls 501 to 503, the stretching rolls 505 to 507, and the cooling rolls 509 to 511 are driven to rotate by drive devices such as motors. These drive devices are included in the longitudinal stretching apparatus operation control unit 50c. In addition, nip rolls for controlling tension may be provided between the preheating rolls, stretching rolls, and cooling rolls.

The apparatus control unit 83 of the control device 8 controls these drive devices according to the set operating conditions. The stretching roll 505 is controlled to rotate at a rotation speed MV1, the stretching roll 506 is controlled to rotate at a rotation speed MV2 higher than the rotation speed MV1, and the stretching roll 507 is controlled to rotate at a rotation speed MV3 higher than the rotation speed MV2. Due to the difference between the rotation speeds MV1 and MV2 and between the rotation speeds MV2 and MV3, tension acts on the resin film 10c in the longitudinal direction x, and the resin film 10c is stretched longitudinally. A longitudinal stretching ratio DDx of the resin film 10c is determined by the settings of the rotation speed MV1 and the rotation speed MV3.

As shown in FIG. 14, the transverse stretching apparatus 6 includes a plurality of rails 61, a plurality of ovens 62, a plurality of tenter clips 63, a stress sensor unit 64, a birefringence meter 65, and a haze meter 66. Note that the stress sensor unit 64, the birefringence meter 65, and the haze meter 66 are a part of the transverse stretching apparatus sensor unit 60s.

The region used for transverse stretching of the resin film 10d in the transverse stretching apparatus 6 is made up of multiple divided areas 69 disposed in the longitudinal direction x. A pair of rails 61 that are symmetrical on the left and right sides when the transverse direction y is taken as the left-right direction and one oven 62 are assigned to each divided area 69. The region used for transverse stretching is made up of three zones disposed in the longitudinal direction x, that is, the conveyance direction. These three zones are, from the upstream side, a preheating zone 6a, a transverse stretching zone 6b, and a heat setting zone 6c. Each zone is made up of multiple divided areas 69 adjacent to each other. In other words, the zone length of each zone in the longitudinal direction x can be changed by the number of divided areas 69 assigned.

The pair of rails 61 in each divided area 69 are each configured such that a rail-to-rail width LW and a rail angle with respect to the longitudinal direction x can be changed independently for each divided area 69. However, between the adjacent divided areas 69, the ends of the right rails 61 and the ends of the left rails 61 are configured or controlled such that their positions are not misaligned in the transverse direction y. Also, the ovens 62 in the divided areas 69 are each configured such that the holding temperature of the corresponding divided area 69 can be set independently for each divided area 69. It is therefore possible to maintain different temperatures for each zone.

With this configuration, it is possible to arbitrarily set, adjust, and control an interval between the parallel rails 61 in the transverse direction y in each zone, a length of the preheating zone 6a in the longitudinal direction x, a length of the transverse stretching zone 6b in the longitudinal direction x, an opening angle of the rails 61 in the transverse stretching zone 6b, a length of the heat setting zone 6c in the longitudinal direction x, a closing angle of the rails 61 in the heat setting zone 6c, and others.

Here, the length of the preheating zone 6a in the longitudinal direction x is defined as a preheating zone length ZLa. Also, the length of the transverse stretching zone 6b in the longitudinal direction x is defined as a transverse stretching zone length ZLb, and the opening angle of the rails 61 in the transverse stretching zone 6b is defined as a transverse stretching zone opening angle α. Further, the length of the heat setting zone 6c in the longitudinal direction x is defined as a heat setting zone length ZLc, and the closing angle of the rails 61 in the heat setting zone 6c is defined as a heat setting zone closing angle β.

In the preheating zone 6a, the set temperature of each oven 62 in the divided areas 69 belonging to the preheating zone 6a is controlled such that the temperature of the resin film 10c is raised gradually before it reaches the transverse stretching zone 6b. Similarly, in the transverse stretching zone 6b, the set temperature of each oven 62 in the divided areas 69 belonging to the transverse stretching zone 6b is controlled such that the zone is kept at a temperature suitable for the transverse stretching of the resin film 10d. Also, in the heat setting zone 6c, the set temperature of each oven 62 in the divided areas 69 belonging to the heat setting zone 6c is controlled such that the zone is kept at a temperature suitable for the heat setting of the resin film 10d.

Here, the temperature in the preheating zone 6a is defined as a preheating temperature ZTa. Also, the temperature in the transverse stretching zone 6b is defined as a transverse stretching temperature ZTb, and the temperature in the heat setting zone 6c is defined as a heat setting temperature ZTc.

The plurality of tenter clips 63 are configured to run from the preheating zone 6a on the upstream side to the heat setting zone 6c on the downstream side along two rail lines formed by the multiple rails 61, and then return to the upstream side of the rails 61 in the preheating zone 6a. The tenter clips 63 have gripping portions that grip the ends of the resin film 10d in the transverse direction y. The tenter clips 63 run along the rail lines while gripping both ends in the transverse direction y of the resin film 10d conveyed from the longitudinal stretching apparatus 5 with their gripping portions. When the tenter clips 63 reach the vicinity of the most downstream position in the longitudinal direction x in the heat setting zone 6c, they release both ends of the resin film 10d from their gripping portions.

By the operation of the tenter clips 63 described above, the resin film 10d is preheated in the preheating zone 6a, transversely stretched in the transverse stretching zone 6b, and heat-set in the heat setting zone 6c. A transverse stretching ratio DDy of the resin film 10d is determined by the setting of the ratio between the interval of the rails 61 in the transverse direction y in the preheating zone 6a and the interval of the rails 61 in the transverse direction y in the transverse stretching zone 6b.

The stress sensor unit 64 includes a plurality of stress sensors (stress meters) 64a. One stress sensor 64a is installed on each of the plurality of tenter clips 63. The stress sensor 64a measures the stress acting on the resin film 10d gripped by the gripping portion of the tenter clip 63, and outputs stress information corresponding to the measured stress. The stress sensor unit 64 outputs, to the control device 8, stress information CF1, ... CFi, ..., CFn (hereinafter collectively referred to as stress information CF) from the stress sensors 64a corresponding to the tenter clips 63 whose gripping portions are gripping the resin film 10d, among the plurality of tenter clips 63.

The stress information CF output from the stress sensor unit 64 includes information representing stress FWj, which is the tensile stress in the transverse direction y occurring at each position of the resin film 10c in the longitudinal direction x. The control device 8 analyzes the stress information CF output from the stress sensor unit 64 to identify the stress FWj acting in the transverse direction y of the resin film 10d at multiple positions j in the longitudinal direction x.

The birefringence meter 65 is disposed in the vicinity of the most downstream position of the heat setting zone 6c in the longitudinal direction x. The birefringence meter 65 outputs, to the control device 8, birefringence information QL1 representing the optical birefringence of the resin film 10e that has been transversely stretched and heat-set. The birefringence information QL1 output by the birefringence meter 65 includes information representing the degree of orientation of polymer chains of the resin constituting the resin film 10e with respect to the fiber axis direction, that is, the degree of orientation of molecular crystals. The control device 8 analyzes the birefringence information QL1 output from the birefringence meter 65 to identify the degree of orientation DR of the resin film 10e.

The haze meter 66 is disposed in the vicinity of the most downstream position of the heat setting zone 6c in the longitudinal direction x. The haze meter 66 outputs, to the control device 8, light transmittance information CL1 representing the light transmittance of the resin film 10e that has been transversely stretched and heat-set. The control device 8 analyzes the light transmittance information CL1 output from the haze meter 66 to identify transparency TP of the resin film 10e.

Hereinafter, the operating condition control process of the longitudinal and transverse stretching apparatuses will be described.

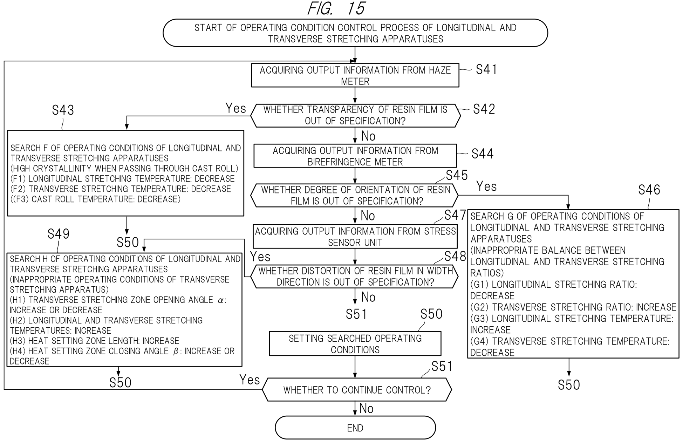

FIG. 15 is a diagram showing an example of an operating condition control process flow of the longitudinal and transverse stretching apparatuses. As shown in FIG. 15, in step S41, output information from the haze meter 66 is acquired. Specifically, the operating condition search unit 81 acquires the light transmittance information CL1 from the haze meter 66.

In step S42, it is determined whether the transparency of the resin film is out of specification. Specifically, the operating condition search unit 81 analyzes the light transmittance information CL1 to identify the transparency TP of the resin film 10e. When the identified transparency TP is outside a set specified range (first range) TPR, the operating condition search unit 81 determines that the transparency of the resin film 10e is out of specification. When it is determined that the transparency of the resin film 10e is out of specification (S42: Yes), the processing step proceeds to step S43. On the other hand, when the identified transparency TP is within the set specified range TPR, the operating condition search unit 81 determines that the transparency of the resin film 10e is not out of specification (within specification). When it is determined that the transparency of the resin film 10e is not out of specification, the processing step proceeds to step S44.

In step S43, appropriate operating conditions of the longitudinal and transverse stretching apparatuses are searched for (search F). Specifically, the operating condition search unit 81 searches for operating conditions of the longitudinal stretching apparatus 5 and the transverse stretching apparatus 6 under which the molecular crystallinity of the resin when it passes through the cast rolls can be reduced or an effect equivalent thereto can be obtained. The reason for performing such a search is that it is presumed that the molecular crystallinity of the resin when it passes through the cast rolls is excessively high when the transparency of the resin film 10e is out of specification.

The operating condition search unit 81 selects at least one of the following change candidates (F1) to (F3) for the multiple parameters that constitute the operating conditions of the cooling apparatus 4, the longitudinal stretching apparatus 5, and the transverse stretching apparatus, for example. Then, based on the selected change candidate, the operating condition search unit 81 determines new parameter values for at least one of the multiple parameters that constitute the operating conditions of the cooling apparatus 4, the longitudinal stretching apparatus 5, and the transverse stretching apparatus 6, and outputs the determined new parameter values as the search result.
(F1) Longitudinal stretching temperature ZTx: Decrease
(F2) Transverse stretching temperature ZTb: Decrease
((F3) Cast roll temperature RT: Decrease)

Here, the longitudinal stretching temperature ZTx listed in the change candidate (F1) refers to the resin film temperature or the environmental temperature when the resin film 10c is longitudinally stretched. Therefore, the longitudinal stretching temperature ZTx may be, for example, the temperature of the roll in the longitudinal stretching apparatus 5. Moreover, the transverse stretching temperature ZTb listed in the change candidate (F2) refers to the resin film temperature or the environmental temperature when the resin film 10d is transversely stretched. Therefore, the transverse stretching temperature ZTb may be, for example, the holding temperature by the oven 62 in the transverse stretching zone 6b in the transverse stretching apparatus 6. The cast roll temperature RT listed in the change candidate (F3) is related to the operating conditions of the cooling apparatus 4, rather than to those of the operating conditions of the longitudinal and transverse stretching apparatuses, but it is considered to have a large effect of reducing the molecular crystallinity of the resin when it passes through the cast roll, and is thus included here as one of the change candidates.

Note that the operating condition search unit 81 determines at least one parameter to be changed and the parameter values thereof for at least two of these multiple parameters based on the set priority order, the settable range of parameter values, the determination sequence or determination algorithm, and others.

The priority order for these multiple parameters, the settable range of parameter values for various parameters, the determination sequence or determination algorithm, and others may be set in advance based on the overall knowledge, past performance, and accumulated know-how of those involved in resin molding, or may be arbitrarily set by the user.

In addition, the operating condition search unit 81 may use artificial intelligence to determine the type of parameters to be changed and the parameter values thereof, for example. This artificial intelligence may have, for example, priority order, settable range of parameter values, determination sequence or determination algorithm, and others set for at least two of the various parameters listed in the above-mentioned change candidates (F1) to (F3). Further, this artificial intelligence may be one that has been trained for at least one of the various parameters listed in the change candidates (F1) to (F3), for example, based on the relationship between the change in parameter values and the change in the molecular crystallization state when the resin passes through the cast roll.

When the search F for the operating conditions of the longitudinal and transverse stretching apparatuses 5 and 6 (and the cooling apparatus 4 in some cases) in step S43 is completed, the processing step proceeds to step S50.

In step S44, output information from the birefringence meter 65 is acquired. Specifically, the operating condition search unit 81 acquires the birefringence information QL1 from the birefringence meter 65.

In step S45, it is determined whether the degree of orientation of the resin film is out of specification. Specifically, the operating condition search unit 81 analyzes the birefringence information QL1 to identify the degree of orientation of the molecular crystals of the resin film 10e. When the identified degree of orientation DR is outside a set specified range (second range) DRR, the operating condition search unit 81 determines that the degree of orientation of the resin film 10e is out of specification. When it is determined that the degree of orientation is out of specification (S45: Yes), the processing step proceeds to step S46. On the other hand, when the identified degree of orientation DR is within the set specified range DRR, the operating condition search unit 81 determines that the degree of orientation is not out of specification (within specification). When it is determined that the degree of orientation is not out of specification (S45: No), the processing step proceeds to step S47.

In step S46, appropriate operating conditions of the longitudinal and transverse stretching apparatuses are searched for (search G). Specifically, the operating condition search unit 81 searches for operating conditions of the longitudinal stretching apparatus 5 and the transverse stretching apparatus 6 under which at least one of the longitudinal stretching ratio DDx and the transverse stretching ratio DDy is changed to improve the balance between the longitudinal and transverse stretching ratios. The reason for performing such a search is that it is presumed that the longitudinal stretching ratio DDx and the transverse stretching ratio DDy are unbalanced when the degree of orientation of the molecular crystals of the resin film 10e is out of specification.

The operating condition search unit 81 selects at least one of the following change candidates (G1) to (G4) for the multiple parameters that constitute the operating conditions of the longitudinal and transverse stretching apparatuses 5 and 6, for example. Then, based on the selected change candidate, the operating condition search unit 81 determines new parameter values for at least one of the multiple parameters that constitute the operating conditions of the longitudinal and transverse stretching apparatuses 5 and 6, and outputs the determined new parameter values as the search result.
(G1) Longitudinal stretching ratio DDx: Decrease
(G2) Transverse stretching ratio DDy: Increase
(G3) Longitudinal stretching temperature ZTx: Increase
(G4) Transverse stretching temperature ZTb: Decrease

Note that the operating condition search unit 81 determines at least one parameter to be changed and the parameter values thereof for at least two of these multiple parameters based on the set priority order, the settable range of parameter values, the determination sequence or determination algorithm, and others.

The priority order for these multiple parameters, the settable range of parameter values, the determination sequence or determination algorithm, and others may be set in advance based on the overall knowledge, past performance, and accumulated know-how of those involved in resin molding, or may be arbitrarily set by the user.

In addition, the operating condition search unit 81 may use artificial intelligence to determine the type of parameters to be changed and the parameter values thereof, for example. This artificial intelligence may have, for example, priority order, settable range of parameter values, determination sequence or determination algorithm, and others set for at least two of the multiple parameters listed in the above-mentioned change candidates (G1) to (G4). Further, this artificial intelligence may be one that has been trained for at least one of the various parameters listed in the change candidates (G1) to (G4), for example, based on the relationship between the change in parameter values and the change in the state of the degree of orientation of molecular crystals in the resin film.

When the search for the operating conditions of the longitudinal and transverse stretching apparatuses 5 and 6 in step S46 is completed, the processing step proceeds to step S50.

In step S47, output information from the stress sensor unit 64 is acquired. Specifically, the operating condition search unit 81 acquires the stress information CF from the stress sensor unit 64.

In step S48, it is determined whether the distortion of the resin film in the width direction is out of specification. Specifically, the operating condition search unit 81 analyzes the stress information CF to identify the degree of distortion, that is, stress in the width direction, that is, the transverse direction y during transverse stretching of the resin film 10d. When a representative value (for example, extreme value, maximum value, average value, or the like) of the identified stress FWj is outside a set specified range (third range) FWR, the operating condition search unit 81 determines that the distortion of the resin film in the transverse direction y is out of specification. When it is determined that the distortion of the resin film is out of specification (S48: Yes), the processing step proceeds to step S49.

On the other hand, when the representative value of the identified stress FWj is within the set specified range FWR, the operating condition search unit 81 determines that the distortion of the resin film in the transverse direction y is not out of specification. When it is determined that the distortion of the resin film is not out of specification (S48: No), the processing step proceeds to step S51.

In step S49, appropriate operating conditions of the longitudinal and transverse stretching apparatuses are searched for (search H). Specifically, the operating condition search unit 81 searches for operating conditions under which the balance between the operating conditions of the longitudinal and transverse stretching apparatuses 5 and 6 becomes appropriate. The reason for performing such a search is that it is presumed that the balance between the operating conditions of the longitudinal and transverse stretching apparatuses 5 and 6 is inappropriate when the distortion of the resin film in the transverse direction y is out of specification.

The operating condition search unit 81 selects at least one of the following change candidates (H1) to (H4) for the multiple parameters that constitute the operating conditions of the longitudinal and transverse stretching apparatuses 5 and 6, for example. Then, based on the selected change candidate, the operating condition search unit 81 determines new parameter values for at least one of the multiple parameters that constitute the operating conditions of the longitudinal and transverse stretching apparatuses 5 and 6, and outputs the determined new parameter values as the search result.
(H1) Transverse stretching zone opening angle α: Increase or decrease
(H2) Longitudinal and transverse stretching temperatures ZTx and ZTb: Increase
(H3) Heat setting zone length ZLc: Increase
(H4) Heat setting zone closing angle β: Increase or decrease

Note that the operating condition search unit 81 determines at least one parameter to be changed and the parameter values thereof for at least two of these multiple parameters based on the set priority order, the settable range of parameter values, the determination sequence or determination algorithm, and others.

The priority order for these multiple parameters, the settable range of parameter values, the determination sequence or determination algorithm, and others may be set in advance based on the overall knowledge, past performance, and accumulated know-how of those involved in resin molding, or may be arbitrarily set by the user.

In addition, the operating condition search unit 81 may use artificial intelligence to determine the type of parameters to be changed and the parameter values thereof, for example. This artificial intelligence may have, for example, priority order, settable range of parameter values, determination sequence or determination algorithm, and others set for at least two of the multiple parameters listed in the above-mentioned change candidates (H1) to (H4). Further, this artificial intelligence may be one that has been trained for at least one of the various parameters listed in the change candidates (H1) to (H4), for example, based on the relationship between the change in parameter values and the change in the state of the distortion of the resin film in the width direction, that is, stress.

When the search H for the operating conditions of the longitudinal and transverse stretching apparatuses 5 and 6 in step S49 is completed, the processing step proceeds to step S50.

In step S50, the searched operating conditions are set. Specifically, the operating condition setting unit 82 sets the searched operating conditions as new operating conditions of the longitudinal stretching apparatus 5 or the transverse stretching apparatus 6 (and the cooling apparatus 4 in some cases). The apparatus control unit 83 controls each apparatus according to the newly set operating conditions.

In step S51, it is determined whether to continue the control of the operating conditions of the longitudinal and transverse stretching apparatuses. Specifically, the apparatus control unit 83 determines whether to continue the control of the operating conditions of the longitudinal stretching apparatus 5 and the transverse stretching apparatus 6 based on the presence or absence of an error signal issued in the resin molding system 1, the presence or absence of a command input for stopping the production, and the like. In this determination, when it is determined that the control is to be continued (S51: Yes), the processing step returns to S41 and the control is continued. On the other hand, when it is determined that the control is not to be continued (S51: No), the control process ends.

### <Operating Condition Control of Winder Apparatus>

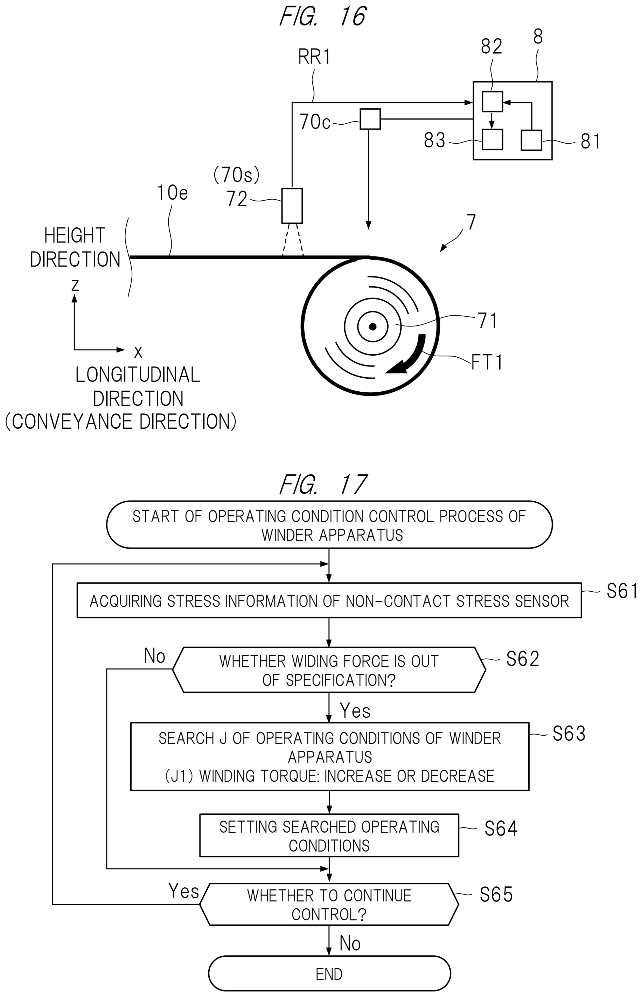

FIG. 16 is a diagram showing a configuration example of a major part related to an operating condition control of the winder apparatus in the resin molding system.

As shown in FIG. 16, the winder apparatus 7 includes a winding roll 71 and a non-contact stress sensor 72. The non-contact stress sensor 72 generates stress information RR1 representing the tension occurring in the resin film 10e, that is, the stress in the longitudinal direction x by, for example, a thermoelastic stress measurement technique using an infrared camera, and outputs the information to the control device 8. Note that the non-contact stress sensor 72 is a part of the winder apparatus sensor unit 70s.

The winding roll 71 is a roll for winding up the stretched and heat-set resin film 10e. The winding roll 71 is driven to rotate by a drive device with a torque FT1 so as to wind up the resin film 10e.

FIG. 17 is a diagram showing an example of an operating condition control process flow of the winder apparatus. As shown in FIG. 17, in step S61, the stress information RR1 from the non-contact stress sensor 72 is acquired. Specifically, the operating condition search unit 81 acquires the stress information RR1 from the non-contact stress sensor 72.

In step S62, it is determined whether the winding force is out of specification. Specifically, the operating condition search unit 81 analyzes the stress information RR1 to identify the stress of the resin film 10e in the longitudinal direction x. When the identified stress FX is outside a set specified range FXR, the operating condition search unit 81 determines that the winding force of the winder apparatus 7 is out of specification. When it is determined that the winding force is out of specification (S62: Yes), the processing step proceeds to step S63. On the other hand, when the identified stress FX is within the set specified range FXR, the operating condition search unit 81 determines that the winding force of the winder apparatus 7 is not out of specification. When it is determined that the winding force is not out of specification (S62: No), the processing step proceeds to step S65.

In step S63, appropriate operating conditions of the winder apparatus are searched for (search J). Specifically, the operating condition search unit 81 searches for operating conditions of the winder apparatus 7 under which the stress FX falls within the specified range FXR. The reason for performing such a search is that it is presumed that the winding force, that is, a winding torque TQ itself is inappropriate when the stress FX is outside the specified range FXR. Here, the winding torque TQ refers to the torque generated in the winding roll 71 when the winding roll 71 is driven to rotate. In this example, the drive device that drives the winding roll 71 to rotate is included in the winder apparatus operation control unit 70c.

The operating condition search unit 81 determines new parameter values for the parameters that constitute the operating conditions of the winder apparatus 7 based on the following change candidate (J1) for the parameters that constitute the operating conditions of the winder apparatus 7, for example, and outputs the determined new parameter values as the search result.

### (J1) Winding torque TQ: Increase or decrease

Note that how much the change amount or change rate is to be allowed for the item of the change candidate (J1) of the parameter may be set in advance based on the overall knowledge, past performance, and accumulated know-how of those involved in resin molding, or may be arbitrarily set by the user.

In addition, the operating condition search unit 81 may use artificial intelligence to determine the parameter values, for example. This artificial intelligence may be one that has been trained, for example, based on the relationship between the change in parameter values of the parameter listed as the change candidate (J1) and the change in winding force.

When the search for the operating conditions of the winder apparatus 7 in step S63 is completed, the processing step proceeds to step S64.

In step S64, the searched operating conditions are set. Specifically, the operating condition setting unit 82 sets the searched operating conditions as the new operating conditions of the winder apparatus 7. The apparatus control unit 83 transmits control signals to the winder apparatus operation control unit 70c such that the winder apparatus 7 is operated according to the newly set operating conditions.

In step S65, it is determined whether to continue the control of the operating conditions of the winder apparatus. Specifically, the apparatus control unit 83 determines whether to continue the control of the operating conditions of the winder apparatus 7 based on the presence or absence of an error signal issued in the resin molding system 1, the presence or absence of a command input for stopping the production, and the like. In this determination, when it is determined that the control is to be continued (S65: Yes), the processing step returns to S61 and the control is continued. On the other hand, when it is determined that the control is not to be continued (S65: No), the control process ends.

As described above, in the resin molding system 1 according to the first embodiment, the sensor unit that detects the state of the resin is provided in at least one of the multiple apparatuses constituting the resin molding system 1. The control device 8 of the resin molding system 1 searches for appropriate operating conditions of the apparatuses constituting the resin molding system 1 based on the output information of the sensor unit, and sets the searched operating conditions as new operating conditions. This search for operating conditions is repeated until the state of the resin satisfies a preset specified condition, for example. Which operating conditions of which apparatus should be changed, how operating conditions should be changed, and in what state of the resin the operating conditions should be changed are set, for example, based on the knowledge, past performance, and accumulated know-how of those involved in resin molding.

Therefore, according to the resin molding system 1 of the first embodiment, the appropriate operating conditions of the resin molding system can be stably set regardless of the user's skill level.

In addition, according to the resin molding system 1 of the first embodiment, appropriate operating conditions are automatically searched for and set, so that it is expected that the time required to set the appropriate operating conditions will be shortened.

### (Second Embodiment)

An operating condition control method in the resin molding system 1 described above is one embodiment of the present invention. According to the operating condition control method of this embodiment, the same effects as those of the first embodiment can be achieved.

### (Third Embodiment)

A program for causing a computer to function as each functional block of the control device described above is also one embodiment of the present invention. Furthermore, a non-transitory, tangible, computer-readable storage medium storing such a program is also one embodiment of the present invention. According to the program or storage medium of this embodiment, the same effects as those of the first embodiment can be achieved.

In the foregoing, each embodiment of the present invention has been described, but the present invention is not limited to the embodiments above, and includes various modifications. In addition, the above embodiments are described in detail for the purpose of facilitating understanding of the present invention, and are not necessarily limited to those including all of the configurations described herein. Furthermore, a part of the configuration of one embodiment can be replaced with a configuration of another embodiment, and it is also possible to add a configuration of another embodiment to the configuration of one embodiment. In addition, numerical values, messages, and the like included in the text and drawings are merely examples, and the effects of the present invention will not be impaired even when using different ones.

Also, addition, deletion, and replacement of other configurations are possible for a part of the configuration of each embodiment. In addition, each of the above-described configurations, functions, processing units, processing means, and others may be implemented by hardware, for example, by designing a part or all of them as integrated circuits. Furthermore, at least one of the above-described components, functions, and others may be implemented by software, for example, by a processor such as an MPU or CPU interpreting and executing a program that implements each function. The range of functions implemented by software is not limited, and hardware and software may also be used in combination. Information such as programs, tables, and files for implementing each function can be stored in a memory, a storage device such as a hard disk or SSD, or a recording medium such as an IC card, SD card, or DVD.

### REFERENCE SIGNS LIST

- 1: resin molding system
- 2: extrusion apparatus
- 3: T-die
- 4: cooling apparatus
- 5: longitudinal stretching apparatus
- 6: transverse stretching apparatus
- 7: winder apparatus
- 8: control device
- 10: resin raw material
- 10a: molten resin
- 10b, 10c, 10d, 10e: resin film
- 20c: extrusion apparatus operation control unit
- 40c: cooling apparatus operation control unit
- 40s: cooling apparatus sensor unit
- 50c: longitudinal stretching apparatus operation control unit
- 60c: transverse stretching apparatus operation control unit
- 60s: transverse stretching apparatus sensor unit
- 70c: winder apparatus operation control unit
- 70s: winder apparatus sensor unit
- 81: operating condition search unit
- 82: operating condition setting unit
- 83: apparatus control unit
- 91: operation unit
- 92: display unit

## Claims

1. A resin molding system comprising:
an extrusion apparatus configured to melt and knead a resin raw material and extrude a molten resin;
a cooling apparatus configured to cool the extruded molten resin and form the molten resin into a resin film; and
a stretching apparatus configured to stretch the formed resin film,
the extrusion apparatus having a T-die attached thereto and configured to form the molten resin into a film shape and discharge it, and
the cooling apparatus being provided with a cooling roll configured to send the molten resin discharged from the T-die toward the stretching apparatus while making the molten resin be in contact with a surface thereof and an air knife configured to blow air to the molten resin being in contact with the surface of the cooling roll,
wherein the resin molding system further comprises:
a first sensor configured to output information representing a change in a width of the molten resin between the T-die and the cooling roll;
a search unit configured to search for operating conditions of the cooling apparatus under which a change in a width of the molten resin formed by the cooling apparatus satisfies a specification, based on the change in the width of the molten resin detected by the information from the first sensor; and
a setting unit configured to set the searched operating conditions as new operating conditions.

2. The resin molding system according to claim 1,
wherein, when a fluctuation width of the width of the molten resin detected by the information from the first sensor is equal to or larger than a first width, the search unit searches for operating conditions of the cooling apparatus under which a ratio of thicknesses of the molten resin before and after cooling becomes lower.

3. The resin molding system according to claim 2,
wherein the search unit determines new parameter values for at least one of multiple parameters including a cooling roll rotation speed, an air blowing position by the air knife, a first distance between the T-die and the cooling roll, a second distance between the air knife and the molten resin on the surface of the cooling roll, and a cooling roll temperature.

4. The resin molding system according to claim 3,
wherein the search unit determines the new parameter values by at least one of decreasing the cooling roll rotation speed, moving the air blowing position by the air knife to an upstream side of the molten resin, increasing or decreasing the first distance, decreasing the second distance, and increasing or decreasing the cooling roll temperature.

5. The resin molding system according to claim 3,
wherein the search unit determines parameters to be changed and parameter values of the parameters for at least two of the multiple parameters based on a set priority order and a settable range of the parameter values.

6. The resin molding system according to claim 3,
wherein the search unit determines parameters to be changed and parameter values of the parameters for at least one of the multiple parameters by using artificial intelligence trained based on a relationship between a change in the parameter values and a change in the fluctuation width of the width of the molten resin.

7. The resin molding system according to claim 1,
wherein, when a reduction width of the width of the molten resin detected by the information from the first sensor is equal to or larger than a second width, the search unit searches for operating conditions of the cooling apparatus under which a cooling state by the air blown from the air knife changes.

8. The resin molding system according to claim 7,
wherein the search unit determines new parameter values for at least one of multiple parameters including a cooling roll rotation speed, an air blowing position by the air knife, a first distance between the T-die and the cooling roll, a second distance between the air knife and the molten resin on the surface of the cooling roll, and a cooling roll temperature.

9. The resin molding system according to claim 8,
wherein the search unit determines the new parameter values by at least one of decreasing the cooling roll rotation speed, moving the air blowing position by the air knife to an upstream side of the molten resin, decreasing the first distance, decreasing the second distance, and decreasing the cooling roll temperature.

10. The resin molding system according to claim 8,
wherein the search unit determines parameters to be changed and parameter values of the parameters for at least two of the multiple parameters based on a set priority order and a settable range of the parameter values.

11. The resin molding system according to claim 8,
wherein the search unit determines parameters to be changed and parameter values of the parameters for at least one of the multiple parameters by using artificial intelligence trained based on a relationship between a change in the parameter values and a change in the reduction width of the width of the molten resin.

12. The resin molding system according to claim 1,
wherein, when a fluctuation width of the width of the molten resin detected by the information from the first sensor is equal to or larger than a first width, the search unit searches for operating conditions of the cooling apparatus under which a ratio of thicknesses of the molten resin before and after cooling becomes lower, and
wherein, when a reduction width of the width of the molten resin detected by the information from the first sensor is equal to or larger than a second width, the search unit searches for operating conditions of the cooling apparatus under which a cooling state of the molten resin by the air blown from the air knife changes.

13. The resin molding system according to claim 12, further comprising a second sensor configured to output information representing a temperature of the molten resin being in contact with the cooling roll,
wherein the search unit searches for conditions of the cooling roll under which a temperature of the molten resin when passing through the cooling roll falls within a set temperature range, based on the information from the second sensor.

14. An operating condition control method for a resin molding system including an extrusion apparatus configured to melt and knead a resin raw material and extrude a molten resin, a cooling apparatus configured to cool the extruded molten resin and form the molten resin into a resin film, and a stretching apparatus configured to stretch the formed resin film,
the extrusion apparatus having a T-die attached thereto and configured to form the molten resin into a film shape and discharge it, and
the cooling apparatus being provided with a cooling roll configured to send the molten resin discharged from the T-die toward the stretching apparatus while making the molten resin be in contact with a surface thereof and an air knife configured to blow air to the molten resin being in contact with the surface of the cooling roll,
the method comprising:
detecting a change in a width of the molten resin between the T-die and the cooling roll;
searching for operating conditions of the cooling apparatus under which a change in a width of the molten resin formed by the cooling apparatus satisfies a specification, based on the detected change in the width of the molten resin; and
setting the searched operating conditions as new operating conditions.

15. A program for a resin molding system including an extrusion apparatus configured to melt and knead a resin raw material and extrude a molten resin, a cooling apparatus configured to cool the extruded molten resin and form the molten resin into a resin film, and a stretching apparatus configured to stretch the formed resin film,
the extrusion apparatus having a T-die configured to form the molten resin into a film shape and discharge it, and
the cooling apparatus being provided with a cooling roll configured to send the molten resin discharged from the T-die toward the stretching apparatus while making the molten resin be in contact with a surface thereof and an air knife configured to blow air to the molten resin being in contact with the surface of the cooling roll,
the program causing a computer to function as:
a search unit configured to search for operating conditions of the cooling apparatus under which a change in a width of the molten resin formed by the cooling apparatus satisfies a specification, based on information representing a change in a width of the molten resin between the T-die and the cooling roll output from a first sensor; and
a setting unit configured to set the searched operating conditions as new operating conditions.
